# EUROPEAN PATENT APPLICATION

(11) **EP 4 378 608 A1**
(43) Date of publication of application: **05.06.2024**
(21) Application number: 22275151.3
(22) Date of filing: 30.11.2022
(51) Int. Cl.: B22F 10/28, B22F 12/90, B22F 10/36, B23K 26/03, B23K 26/342, B33Y 10/00, B33Y 30/00, B33Y 50/02

(54) **MONITORING APPARATUS AND A METHOD OF MONITORING A MELT POOL DURING POWDER BED FUSION MANUFACTURING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A monitoring apparatus for imaging a melt pool during powder bed fusion manufacturing, the monitoring apparatus comprising: a first photodiode having a first field of view and configured to receive electromagnetic radiation from a first portion of a melt pool; and a second photodiode having a second field of view and configured to receive electromagnetic radiation from a second portion of the melt pool; wherein the first portion of the melt pool is different from the second portion of the melt pool.

## Description

### FIELD

The present disclosure relates to a monitoring apparatus for powder bed fusion manufacturing; to a powder bed fusion manufacturing apparatus comprising the same; and to a method of monitoring a melt pool during powder bed fusion manufacturing.

### BACKGROUND

Powder bed fusion (PBF) manufacturing, such as laser powder bed fusion (L-PBF) manufacturing, is a form of 3D printing in which a bed of powdered material (usually powdered metal, such as titanium or a titanium alloy) is irradiated with a laser, in order to cause localised melting and subsequent fusion of the powder into a solid part. The path of the laser is controlled to achieve the desired part shape. By irradiating and fusing successive layers of the powder, a 3D part can be printed layer-by-layer.

When the laser (in the case of L-PBF) irradiates the powder bed, a localised melt pool is formed at the point of intersection between the laser beam and the surface of the powder bed. The power of the laser beam, and the scanning speed of the laser across the powder bed, affect the size and temperature of the melt pool. This in turn affects the properties of the printed part. Similarly, in electron beam powder bed manufacturing (EB-PBF), the melt pool is generated by an electron beam, rather than a laser beam.

In order to ensure the desired physical properties of the printed part, it's therefore important that the properties of the melt pool are closely monitored. For example, if the melt pool is too cool, the powder may not properly fuse together. If the melt pool is too large, control over the final printed shape of the part may be compromised. By monitoring these properties at frequent intervals during the printing process, for example thousands of times a second, it may be possible to reduce or prevent defects from occurring during the printing process.

One known approach for monitoring the properties of a melt pool is to record the melt pool with a high-speed camera, for example a high-speed near-infrared camera. However, because of the high frame rate required to adequately monitor the printing process, this approach necessarily produces excessive amounts of data, much of which is redundant, and so can only practicably be employed for at most a few seconds. It therefore is burdensome, and in some cases not possible, continually monitoring the printing of an entire part.

Another known approach is to use a photodiode, for example an infrared photodiode, to monitor the melt pool. A photodiode produces much less data than a high-speed camera, and so is better suited to high-frequency capture rates over extended periods of time. However, the information about the melt pool provided by this approach is only of limited value.

### SUMMARY

The present disclosure has been developed to address at least some of the above problems.

In a first aspect, there is provided a monitoring apparatus for monitoring a melt pool during powder bed fusion manufacturing, the monitoring apparatus comprising a photodiode configured to receive electromagnetic radiation from a centre of a melt pool, wherein the photodiode has a field of view at the powder bed which is smaller than a spot size of an energy beam used to irradiate the powder bed. For example, a diameter of the field of view at the powder bed may be less than 50% of the spot size at the melt pool. This may equate to a field of view of less than 200µm across at the melt pool, for example less than 100µm across at the melt pool. In some examples, the field of view may be less than 50µm across at the melt pool, for example a field of view which is less than 30µm across at the melt pool.

Herein, the spot size may refer to a diameter of the energy beam at its intersection with the powder bed. The energy beam may for example be a laser beam, or an electron beam. In much of the present disclosure, a laser beam (i.e. L-PBF) is referred to for simplicity. However, as the skilled person will understand, the principle of the present disclosure can equally be applied to forms of powder bed manufacturing which use different energy sources, such as an electron beam (EB-PBF).

The melt pool is larger than the spot size. By using a field of view of this size directed at the centre of the melt pool, thermal properties at the centre of the melt pool can be accurately determined. In particular, deleterious contributions from cooler regions surrounding an epicentre of the melt pool are ignored by the field of view. By sampling the centre of the melt pool, and therefore ignoring contributions from elsewhere, the output of the photodiode will depend only on the intensity of the radiation (emission intensity) from the centre of the melt pool, and will be substantially independent of temperature distribution across the entire melt pool. Therefore, because temperature is proportional to emission intensity, accuracy of temperature determination is improved. Temperature calibration may also be improved.

Herein, maximum emission intensity will sometimes be referred to instead of maximum temperature. However, as the skilled person will understand, maximum emission intensity may be proportional to maximum temperature.

In a second aspect, there is provided a monitoring apparatus for imaging a melt pool during powder bed fusion manufacturing, the monitoring apparatus comprising:
a first photodiode having a first field of view configured to receive electromagnetic radiation from a first portion of the melt pool; and
a second photodiode having a second field of view configured to receive electromagnetic radiation from a second portion of the melt pool;
wherein the first portion of the melt pool is different from the second portion of the melt pool.

By using a plurality of photodiodes having different fields of view in this way, the apparatus can advantageously monitor a temperature profile and/or a temperature distribution of the melt pool, thereby providing additional information about the melt pool. Additionally, by avoiding the use of a camera, the amount of data produced remains small and manageable.

In use, the monitoring apparatus may be used to image a melt pool generated in a powder bed by an energy beam, such as a laser. References in the first and second aspects to a melt pool may therefore be to a notional imaging location of the apparatus, for example a notional imaging location onto which the fields of view are trained. In use the apparatus may be arranged such that the notional imaging location coincides with a melt pool generated by the energy beam.

Herein, a field of view may be defined as a maximum area that can be observed at a particular location (e.g. at the imaging location, or melt pool).

Optional features of the first and second aspects will now be described.

The monitoring apparatus may further comprise a third photodiode having a third field of view configured to receive electromagnetic radiation from a third portion of the melt pool, wherein the third portion is different from the first and second portions.

The portions of the melt pool may at least partially overlap each other. The first portion of the melt pool may be contained within the second portion of the melt pool. Similarly, the second portion of the melt pool may be contained within the third portion of the melt pool. The melt pools may, for example, be concentric. As the skilled person will understand, the apparatus may be arranged such that the respective fields of view are positioned as described at a notional imaging location of the apparatus, thereby observing the above-described portions of the melt pool.

The first field of view may be narrower than the second field of view. The third field of view may be wider than the second field of view.

The first field of view may be less than 50µm across at the melt pool, for example less than 30µm across at the melt pool. A largest of the fields of view (for example the second field of view where two photodiodes are used, or the third photodiode where three photodiodes are used, etc.) may be over 100µm across at the melt pool, for example over 300µm across at the melt pool.

In an example in which three photodiodes are used, the first field of view may be less than 50µm at the melt pool (for example less than 30µm), the third field of view may be over 100µm across at the melt pool (for example over 300µm across), and a size of the second field of view may be between that of the first and third fields of view. In such an example, the fields of view may also be arranged such that the respective portions of the melt pool are concentric.

The apparatus may further comprise an optical element associated with each photodiode. Each optical element may be arranged to prescribe the field of view of its respective photodiode. Each optical element may comprise an aperture. Each optical element may further comprise at least one lens for focussing radiation from the aperture onto the photodiode.

The photodiodes may have the same spectral response as one another. That is to say, the photodiodes may be sensitive to the same range of electromagnetic frequencies as one another. For example the photodiodes may be infrared (IR) photodiodes (sensitive to frequencies between 300GHz and 400THz), for example near-IR photodiodes (sensitive to frequencies between 200THz and 400THz).

The apparatus may further comprise a further photodiode configured to receive electromagnetic radiation from the melt pool, the further photodiode having a different spectral response from the other photodiodes. For example, the further photodiode may be an ultraviolet (UV) photodiode (sensitive to frequencies between 740THz and 30PHz). The further photodiode may have a field of view matching that of the first photodiode, and may be arranged to receive electromagnetic radiation from the first portion of the melt pool.

Accordingly, by comparing the outputs from the first and further photodiodes, it may be possible to improve temperature determination. In particular, by comparing the intensities of radiation at the two frequency bands, it may be possible to more accurately determine a temperature of the melt pool.

Collectively, outputs from the photodiodes may produce a low-dimensionality image of the melt pool, requiring only a small number of storage bytes while retaining key information about the melt pool (for example, maximum emission intensity, and temperature distribution). The apparatus may thus further comprise a processor configured to compile outputs from each of the photodiodes into a low-dimensionality image of the melt pool. However, as the skilled person will understand, an image of the melt pool may not be produced. For example, the processor may use the outputs to control at least one operating parameter of a powder bed fusion manufacturing apparatus, without producing an image.

In a third aspect, there is provided a powder bed fusion manufacturing apparatus comprising:
a powder bed;
an energy source (e.g. laser) configured to irradiate a surface of the powder bed with an energy beam (e.g. laser beam) to generate a melt pool; and
a monitoring apparatus according to the first aspect or the second aspect, the monitoring apparatus arranged to monitor the melt pool.

Optional features of the third aspect will now be described.

The apparatus may further comprise a controller configured to process signals from each photodiode to determine at least one thermal property of the melt pool. Herein, the at least one thermal property may include one or more of: a maximum emission intensity of the melt pool, and a temperature distribution at the surface of the melt pool.

The controller may be configured to adjust at least one of a power supplied to the energy source and a speed of the energy beam across the surface, based on the determined thermal property of the melt pool. For example, when an output from at least one of the photodiodes is above a predetermined threshold (e.g. indicative of a maximum emission intensity above a predetermined threshold, or a melt pool size over a predetermined threshold), a power supplied to the energy source may be reduced. Additionally, or alternatively, a speed of the energy beam across the surface may be increased.

At least the first field of view may be centred on a point of intersection between the energy beam and the surface of the powder bed. Accordingly, the first field of view may image an epicentre (point of peak temperature) of the melt pool.

In a fourth aspect, there is provided a method of monitoring a melt pool during powder bed fusion manufacturing, the method comprising:
irradiating a surface of a powder bed with an energy beam to generate a melt pool in the powder bed;
receiving, from a first photodiode having a first field of view, a first electrical signal indicative of an intensity of electromagnetic radiation received from a first portion of the melt pool;
receiving, from a second photodiode having a second field of view, a second electrical signal indicative of an intensity of electromagnetic radiation from a second portion of the melt pool; and
determining, based on the first and second electrical signals, at least one thermal property of the melt pool;
wherein the second portion is different from the first portion. The thermal property may be one or both of a maximum emission intensity of the melt pool, and a temperature gradient of the melt pool.

In a fifth aspect, there is provided a method of monitoring a melt pool during powder bed fusion manufacturing, the method comprising:
irradiating a surface of a powder bed with an energy beam to generate a melt pool in the powder bed;
receiving, from a photodiode, an electrical signal indicative of an intensity of electromagnetic radiation received from a centre of the melt pool; and
determining, based on the electrical signal, a thermal property of the melt pool;
wherein a field of view of the photodiode is less than 50µm across at the melt pool, for example less than 30µm across at the melt pool. The thermal property may be a maximum emission intensity of the melt pool.

Optional features of the fourth and fifth aspects will now be described.

The method may further comprise receiving, from a third photodiode having a third field of view, a third electrical signal indicative of an intensity of electromagnetic radiation received from a third portion of the melt pool; wherein the third portion is different from the first and second portions; and wherein the determining is further based on the third electrical signal.

The method may further comprise controlling at least one of a power of the energy beam and a speed of the energy beam across the surface, based on the determined thermal property.

The determining may be done at a frequency of at least 500Hz, for example at least 1kHz.

The method may further comprise controlling the first photodiode so that the first field of view is arranged to sample a point of intersection between the energy beam and the surface.

The portions of the melt pool may at least partially overlap each other. The first portion of the melt pool may be contained within the second portion of the melt pool. Similarly, the second portion of the melt pool may be contained within the third portion of the melt pool. The melt pools may, for example, be concentric. As the skilled person will understand, the method may be controlled such that the respective fields of view are arranged as described at the location of the melt pool.

The first field of view may be narrower than the second field of view. The third field of view may be wider than the second field of view.

The first field of view may be less than 50µm across at the melt pool, for example less than 30µm across at the melt pool. A largest of the fields of view may be over 100µm across at the melt pool, for example over 300µm across at the melt pool.

In an example in which three photodiodes are used, the first field of view may be less than 50µm at the melt pool (for example less than 30µm), the third field of view may be over 100µm across at the melt pool (for example over 300µm across), and a size of the second field of view may be between that of the first and third fields of view. In such an example, the fields of view may also be arranged such that the respective portions of the melt pool are concentric.

The photodiodes may have the same spectral response as one another. That is to say, the photodiodes may be sensitive to the same range of electromagnetic frequencies as one another. For example the photodiodes may be infrared (IR) photodiodes (sensitive to frequencies between 300GHz and 400THz), for example near-IR photodiodes (sensitive to frequencies between 200 and 400THz).

In a sixth aspect there is provided a system comprising: a processor; and a memory comprising instructions which when implemented by the processor, cause the processor to implement a method according to the fourth or fifth aspect.

In a seventh aspect, there is provided a computer-readable medium comprising instructions which, when implemented by a processor, cause the processor to implement a method according to the fourth or fifth aspect.

### BRIEF DESCRIPTION OF THE DRAWINGS

Examples of the present disclosure will now be described, with reference to the enclosed drawings, in which:
Figure 1A shows an L-PBF manufacturing apparatus including a monitoring apparatus according to the present disclosure;
Figure 1B shows a melt pool generated by the manufacturing apparatus of Figure 1A;
Figure 2A shows a field of view (FoV) arrangement according to a first example of the present disclosure;
Figure 2B shows a field of view (FoV) arrangement according to a second example of the present disclosure;
Figure 2C shows a field of view (FoV) arrangement according to a third example of the present disclosure;
Figure 2D shows a field of view (FoV) arrangement according to a fourth example of the present disclosure;
Figure 2E shows a field of view (FoV) arrangement according to a fifth example of the present disclosure;
Figure 3 shows a further L-PBF manufacturing apparatus including a further monitoring apparatus according to a further example of the present disclosure;
Figure 4 shows a the L-PBF manufacturing apparatus of Figure 3, and a variation of the monitoring apparatus of Figure 3;
Figure 5A shows a method of 3D printing a part using L-PBF manufacturing according to the present disclosure;
Figure 5B shows a method of monitoring a melt pool during L-PBF manufacturing according to the present disclosure; and
Figure 6 shows a system for implementing the methods according to Figures 5A and 5B.

Like reference numerals are used for like components throughout the drawings.

### DETAILED DESCRIPTION

Powder bed fusion (PBF) manufacturing, exemplified in the detailed description as laser powder bed manufacturing (L-PBF), is a form of 3D printing in which a laser is used to selectively melt a bed of powdered material, which when cooled fuses together to form a solid part. In practice, a thin layer of the powder is spread across the bed, and a laser is moved across the thin layer of powder according to a predetermined pattern in order to fuse the powder into a solid part according to the predetermined pattern. Subsequent layers of powder material are then spread across the bed and irradiated by the laser, thereby printing the 3D part layer-by-layer. As the skilled person will understand, the laser may be moved over the powder bed, or alternatively, the powder bed may be moved under the laser. Either could be used, provided that there is relative movement between the two. Additionally, as described in more detail below, in some examples the laser beam may be moved over the surface of the powder bed using rotatable mirrors, while the laser source itself remains stationary.

When the laser irradiates the surface of the powder bed, it melts the powdered material to create a melt pool at the intersection point between the laser and the powder bed. The melt pool then cools to produce a solid part from the powder.

During the printing process, it's important that the power of the laser, and the tracking speed of the laser beam across the powder bed, is closely controlled, in order to ensure that a melt pool of the desired size and temperature is formed. If the power of the laser is too low, or the tracking speed of the laser beam is too high, the powder may not fully melt, leading to weaknesses in the printed part. On the other hand, if the laser power is too high, or the tracking speed too low, the melt pool may become too large, such that control over the shape of the 3D printed part is compromised. Additionally, if the power of the laser is too high, it may cause deleterious thermal activities (keyhole formation, plasma production, and/or sputtering) in the melt pool, which may also lead to weaknesses in the printed part.

Accordingly, it's important to closely monitor the thermal properties of the melt pool, in order to avoid problems in the printing process which would otherwise compromise the printed 3D part. In some scenarios, accurately controlling the properties of the melt pool may reduce the need for post-printing testing of the printed part.

Another relevant factor in the monitoring of melt pools, is that it must be done at very regular intervals, typically many hundreds of times a second (e.g. at a frequency of at least 500Hz, such as at least 1kHz, or even several kHz), in order to effectively monitor the melt pool and identify problems. Given that L-PBF can take several hours to complete for large parts, it's therefore important that each image of the melt pool has low dimensionality, so that manageable amounts of data are collected during the monitoring. If too much data is collected, the amount of memory needed to store the information, and the processing power needed to analyse it, becomes overly burdensome.

The present disclosure therefore provides a melt pool monitoring apparatus and method which can obtain low-dimensionality images of the melt pool, while still recording the key thermal properties needed for controlling the printing process and thereby reducing imperfections in the printed part. To achieve this aim, the invention uses photodiode(s), whereby the field(s) of view of the photodiode(s) are carefully configured to ensure that they capture the key properties of the melt pool which must be monitored, namely maximum temperature and/or thermal distribution.

A photodiode is a device which produces an electrical signal which outputs an electrical signal (current) proportional to an intensity of light incident upon the photodiode. Accordingly, photodiodes in the present disclosure are used to measure the intensity of electromagnetic radiation incident upon them. Typically, for the purpose of the present disclosure, infrared (IR) or near-infrared (near-IR) photodiodes are used (unless otherwise stated). Such photodiodes are sensitive to electromagnetic radiation in the IR or near-IR spectrum, and thus output an electrical signal (current), the magnitude of which is proportional to the intensity of IR or near-IR radiation incident upon them. However, as the skilled person will understand, other types of photodiode, having a different spectral response, may be used.

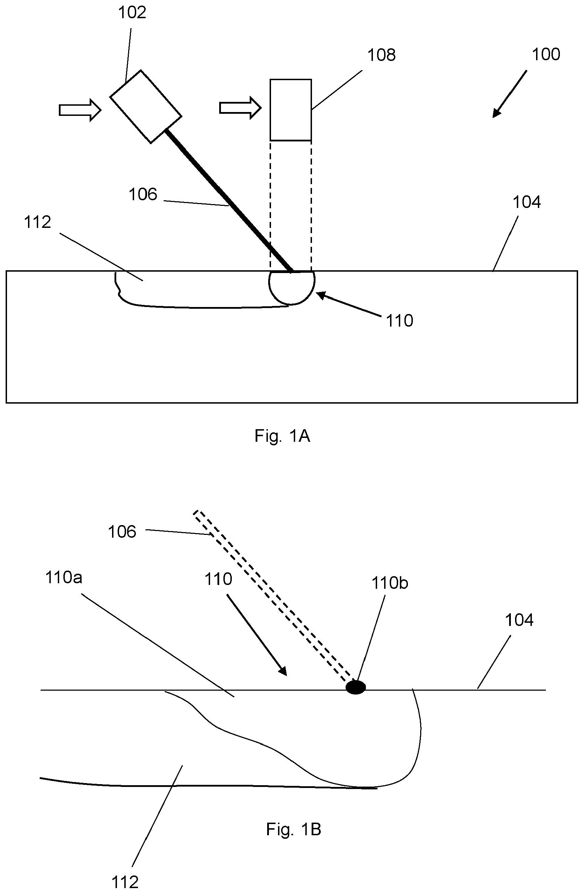

Figure 1A schematically illustrates a L-PBF manufacturing apparatus 100, which includes a monitoring apparatus according to the present disclosure. As the skilled person will understand, Figure 1A is only illustrative. Some components, for example optics for directing the laser and the radiation from the melt pool, have been omitted in order to more clearly illustrate the underlying concept of the present disclosure.

As shown, a laser 102 moves across a surface of a powder bed 104, irradiating the surface of the powder bed 104 with a laser beam 106 as it travels. At the same time, a monitoring apparatus 108 according to the present disclosure images a melt pool 110 generated by the laser beam 106, to image the thermal properties of the melt pool 110. The monitoring apparatus 110 is caused to move in lock-step with the laser 102, such that it is always arranged to sample at or near a centre of the melt pool 110. For example, the laser 102 and the monitoring apparatus 110 may be attached to the same robotic arm, so that their movement is coupled. Alternatively, the laser 106 and the monitoring apparatus 110 may be manipulated by the same optical arrangement, such that their optical paths are coupled. As the laser 102 moves, the melt pool 110 also moves across the powder bed 104, leaving a path of solidified material 112 behind it, thereby gradually growing the part being printed.

Typically, depending on the type of material being printed, the melt pool 110 may preferably have a total diameter of between 50-250µm, with the epicentre (area of peak temperature) in the melt pool 110 being located at the location of intersection between the laser beam 106 and the surface of the powder bed 104. The temperature of the melt pool 110 may reduce from the epicentre towards the outer edges of the melt pool. Accordingly, two key characteristics of the melt pool 110 are the maximum temperature at the centre 110b (sometimes referred to herein as an epicentre 110b) of the melt pool, and the temperature gradient surrounding the centre. As described below, the monitoring apparatus of the present disclosure is capable of monitoring one or both of these properties.

The laser beam 106 is shown in Figure 1A having an oblique angle of incidence. However, as will become clear from the description that follows, the laser beam 106 may alternatively have a perpendicular angle of incidence.

The melt pool 110 is schematically illustrated as being approximately uniform in shape in Figure 1A. However, as shown in Figure 1B, the melt pool 110 may rather have a tapered shape, with a tail portion 110a extending behind the epicentre 110b of the melt pool as the melt pool 110 moves along the surface of the powder bed 104. The epicentre 110b of the melt pool 110 is as described above the hottest point of the melt pool 110, and coincides with the location at which the laser beam 106 intersects the surface of the powder bed 106. Behind the tail 110b, the solid material 112 is formed.

The monitoring apparatus 108 includes one or more photodiodes (not shown in Figure 1). Each photodiode has its own field of view (FoV), with each FoV being directed to a respective portion of the melt pool 110, so that each photodiode images a respective portion of the melt pool. Where a single photodiode is used, its output can be calibrated to provide an indicative temperature reading for the portion of the melt pool. Where a plurality of photodiodes are used, the outputs from the photodiodes can further be combined to form a low-dimensionality image of the heat distribution within the melt pool.

Herein, FoV is defined as the total amount of a target surface that can be 'seen' by a given photodiode. In an example embodiment, each FoV is circular in shape, such that the FoV corresponds to a diameter of the circular area that can be seen. However, as the skilled person will understand, other shapes of FoV may be used. Where other shapes are used, the FoV may be defined at the widest point of the area that can be seen.

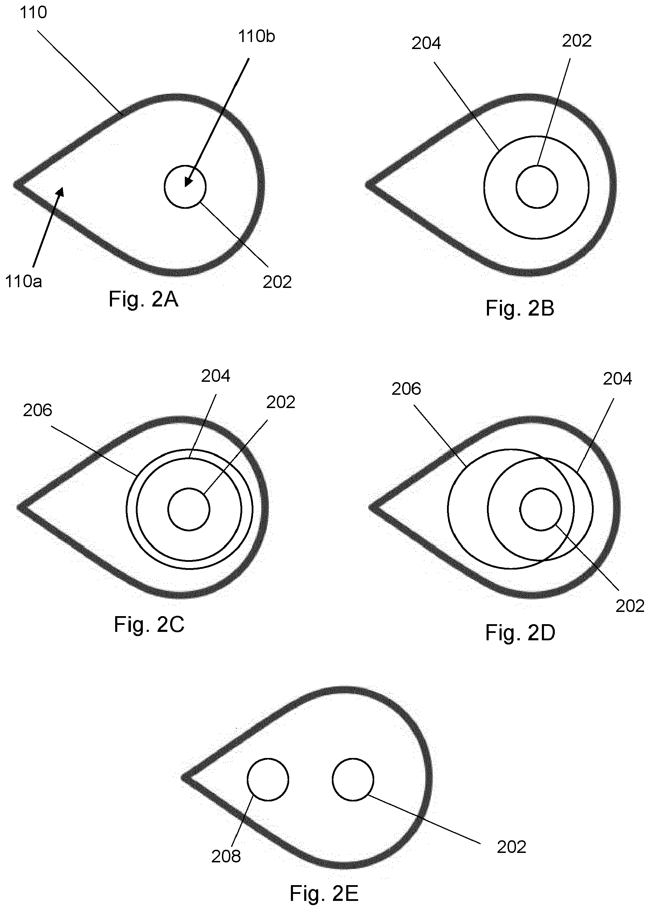

Figures 2A-2E show possible imaging configurations of the photodiodes according to the present disclosure. Each is shown in plan view.

In Figure 2A, an imaging configuration using a single photodiode is shown. As shown, the FoV 202 is smaller than the total size of the melt pool 110, and is arranged to sample the epicentre 110b of the melt pool 110. Accordingly, temperature at the centre of the melt pool can be determined. Typically, the first FoV may have a diameter of 30µm at the melt pool, so as to image only the hottest part of the melt pool. Accordingly, an accurate reading of the maximum melt pool temperature is obtained, or at least an accurate determination of emission intensity, which is proportional to temperature.

In Figure 2B, the imaging configuration when two photodiodes are used, is shown. Each photodiode has a respective field of view - a first field of view 202, and a second field of view 204. As shown, the first FoV 202 is narrower than the second FoV 204, and is concentric to the first FoV 202. Both FoVs image the melt pool 110. Accordingly, a low-dimensionality temperature distribution around the melt pool is obtained, in addition to the maximum temperature (or emission intensity) of the melt pool.

In Figure 2C, an imaging configuration when using three photodiodes is shown. In this example, the first FoV 202 is smaller than the second FoV 204, and the second FoV 204 is smaller than the third FoV 206. Accordingly, in this example, further information about temperature distributions in the melt pool is obtained. Typically, the third FoV may have a diameter of 400µm at the melt pool. However, the skilled person will understand that other diameters may be used, for example a larger FoV. The sizes of the FoVs may for example be dependent on the powdered material being used. In some examples, the third FoV 206 may be larger than the size of the melt pool.

In Figure 2D, an imaging configuration when using three photodiodes is again shown. In this example, the first FoV 202 is located within the second FoV 204 and is concentric to the second FoV 204. The third FoV 206 is not concentrically arranged, but rather is shifted to sample the tail 110a of the melt pool 110.

In Figure 2E, two FoVs 202, 208 of the same size are used. However, they are offset from one another, such that one of the FoVs 202 images the epicentre 110b of the melt pool, while the other FoV 208 images the tail 110a of the melt pool.

As the skilled person will understand, the photodiodes of the monitoring apparatus may be fixed in any one of the arrangements shown in Figures 2A-2E. However, in other examples, they may be moved relative to one another as required. Additionally, as the skilled person will understand, other arrangements of the FoVs are possible, and additional FoVs (from additional photodiodes) may be used.

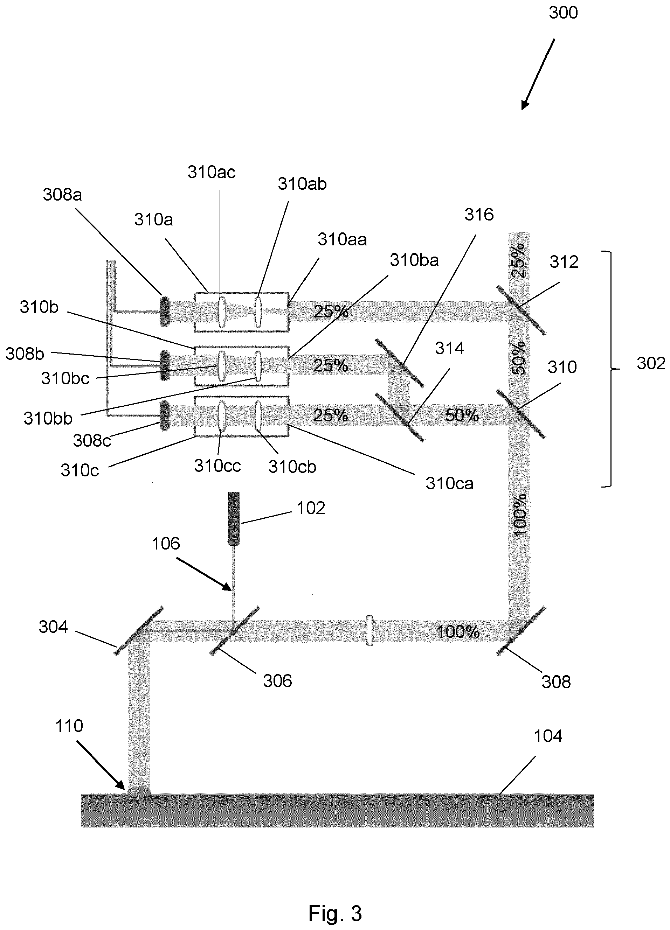

Figure 3 schematically shows an exemplary setup of a L-PBF apparatus 300 and monitoring apparatus 302 according to a further example of the present disclosure. The monitoring apparatus 302 may be configured such that the photodiodes of the setup in Figure 3 have the FoV layout shown in Figure 2C or 2D.

In the example of Figure 3, the laser beam 106 has a perpendicular angle of incidence on the powder bed 104. This is achieved by directing the laser towards the powder bed 104 using mirrors 304, 306. At the same time, these two mirrors - as well as additional optics - direct electromagnetic radiation emitted from the melt pool 104 towards the monitoring apparatus 302, where it is received by each of a first photodiode 308a, a second photodiode 308b, and a third photodiode 308c.

As shown, a first optical element 310a directs the electromagnetic radiation into the first photodiode 308a; a second optical element 310b directs the electromagnetic radiation into the second photodiode 308b; and a third optical element 310c directs electromagnetic radiation into the third photodiode 308c.

First optical element 310a includes an aperture 310aa, a first lens 310ab, and a second lens 310ac. The aperture 310aa is sized to limit the EM radiation entering the first photodiode 308a, thereby prescribing the first FoV 202 of the first photodiode 308a. The lenses 310ab and 310ac then direct the EM radiation passing through the aperture 310aa onto the first photodiode 308a.

Second optical element 310b similarly includes an aperture 310ba, a first lend 310bb, and a second lens 310bc. The aperture 310ba is sized to limit the EM radiation entering the second diode 308b, thereby prescribing the second FoV 204 of the second photodiode 308b. The lenses then direct the EM radiation passing through the second aperture 310ba onto the second photodiode 308b.

Third optical element 310ac includes an aperture 310ca, a first lens 310cb, and a second lens 310cc. The aperture 310ca is sized to limit the EM radiation entering the third photodiode 308c, thereby prescribing the third FoV 206 of the first photodiode 308c. The lenses 310cb and 310cc then direct the EM radiation passing through the aperture 310ca onto the first photodiode 308c.

The apparatus 300 includes a plurality of mirrors for directing the laser beam 106 to the powder bed 104, and for directing radiation emitted from the melt pool towards the photodiodes. The mirrors will now be described in more detail.

Considering first the laser beam 106, a first mirror 304; and a second mirror 306, which is configured to reflect only wavelengths corresponding to that of the laser, direct the laser beam 106 from the laser 102 towards the powder bed 104. The first mirror 304 is oriented at 45° to the surface of the powder bed 104, such that the laser beam 106 has an angle of incidence at the powder bed 104 of 90°.

In practice, first mirror 304 may be rotatable, so as to achieve movement of the laser beam 106 across the surface of the powder bed 104, and so as to similarly direct the field(s) of view of the photodiodes onto the melt pool 110. In some examples, where movement of the laser beam 106 and fields of view is needed in two directions across the surface of the powder bed 104, a further mirror 305 may be provided. The first mirror 304 may be configured to rotate about a first axis to cause movement of the laser beam 106 and fields of view across the surface of the powder bed 104 in a first direction; and the further mirror 305 may be configured to rotate about a second axis to cause movement of the laser beam 106 and fields of view across the surface of the powder bed 104 in a second direction. Therefore, in this example, the laser would not always have an angle of incidence of 90°.

Considering now the radiation emitted from the melt pool, the first mirror reflects the radiation towards a third mirror 308. Because the second mirror 306 is configured only to reflect wavelengths corresponding to that of the laser, the radiation from the melt pool passes through the second mirror 306 without reflection. The third mirror then directs the radiation towards the monitoring apparatus 302, at which point a series of 50% transmission mirrors (for example, half-silvered mirrors) 310, 312, 314, 316 then direct the laser light to each of the photodiodes, while ensuring an equal amount of the radiation (in this case 25%) is directed towards each optical element 310a, 310b, 310c. This radiation then interacts with the optical elements 310a, 310b, 310c as described above, and finally reaches the photodiodes 308a, 308b, 308c, where it is then detected.

Each photodiode 308a, 308b, 308c outputs a current which is proportional to the intensity of the electromagnetic radiation incident upon it. Therefore, because the first photodiode 308a has a FoV which samples the epicentre of the melt pool 110, the output from the first photodiode 308a is indicative of a maximum temperature (or emission intensity) at the epicentre of the melt pool 310. Regarding the second and third photodiodes 308b, 308c, these have progressively wider FoVs, and so capture radiation emitted from a wider area on the melt pool. Accordingly, they provide information on the temperature distribution throughout the wider melt pool 110. Collectively, the arrangement of Figure 3 therefore enables a maximum temperature (or emission intensity) at the centre 110b of the melt pool to be determined, and further enables a temperature distribution of the melt pool to be determined.

A processor (not shown in Figure 3) may be used to process the signals from the photodiodes 308a, 308b, 308c. The processor may be configured to determine when the signals are indicative of a problem with the melt pool 110. For example, if the reading at the first photodiode 308a is too low, the processor may determine that the melt pool 110 is not hot enough, and that the power supplied to the laser 102 needs to be increased, or that the laser beam tracking speed needs to be reduced. Similarly, outputs of the first, second and third photodiodes 308a, 308b, 308c are indicative a very gradual temperature gradient, the processor may determine that the laser beam tracking speed needs to be increased. As the skilled person will understand, these are non-exhaustive examples of processing tasks to be performed by the processor.

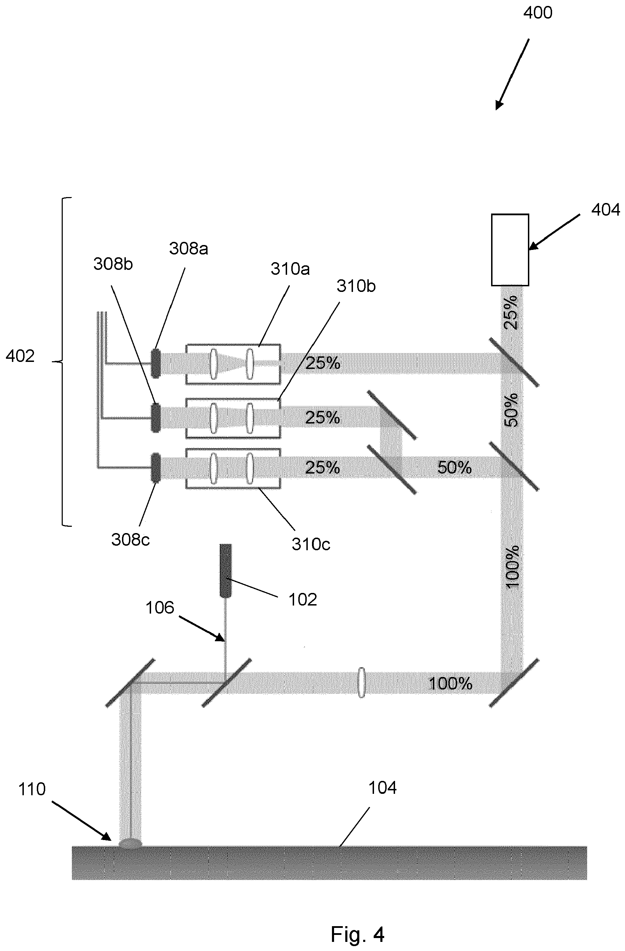

Figure 4 shows a variation of the Figure 3 embodiment. In the monitoring apparatus 402 shown in Figure 4, a further photodiode 404, this time an ultraviolet (UV) photodiode, is included. As shown, the UV photodiode 404 also receives 25% of the radiation from the melt pool 110. The FoV of the UV photodiode 404 is configured to be the same as that of the first photodiode 308, and is configured to exactly overlap the FoV of the first photodiode 308. That is to say, the UV photodiode 404 is also configured to image the epicentre 110B of the melt pool, to thereby also image the hottest part of the melt pool.

Through the provision of the first photodiode 308 and the UV photodiode 404, two intensity readings, at two different frequency bands (one at the infrared, and one at the ultraviolet) are obtained for the epicentre 110b of the melt pool. By comparing these two readings, an even more accurate maximum temperature reading for the melt pool 110 can be determined.

As the skilled person will understand, IR photodiode(s) in combination with a UV photodiode need not necessarily be used. For example, a near-IR photodiode in combination with a far-IR diode could be used. Many combinations could be used. Alternatively, identical photodiodes could be used, but with different wavelength-specific filters provided to adjust the wavelength of radiation received by each photodiode.

Although not shown, the UV photodiode 404 may also have a corresponding optical element, for similarly prescribing the FoV of the UV photodiode 404.

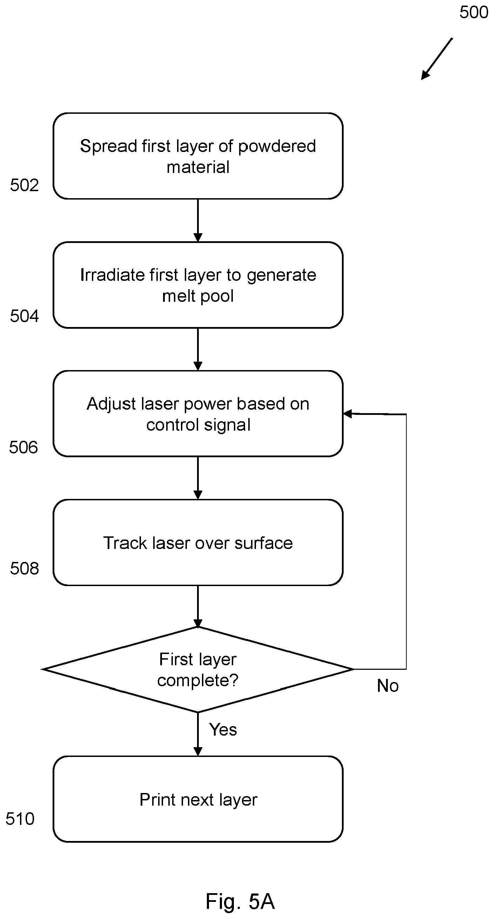

Figure 5A shows a method 500 of 3D printing a part using L-PBF manufacturing according to the present disclosure, for example using the apparatus of Figure 1, 3 or 4.

At step 502, a thin layer of powdered material, such as powdered titanium, is evenly spread across a powder bed.

At step 504, a laser is controlled to irradiate the powder bed to generate a melt pool in a surface of the powder bed. The laser is controlled to irradiate the laser pool at a predetermined operating power.

At step 506, the operating power of the laser is adjusted based on a control signal generated by the monitoring apparatus.

At step 508, the laser beam is controlled to track across the surface of the powder bed based on a first layer of a predefined 3D printing pattern.

As shown in Figure 5A, steps 506-508 are repeated until the entire first layer has been printed. They may be repeated at a repetition rate of 1kHz or more, for example the same repetition rate as that of monitoring method 520.

At step 510, once the first layer of the predefined printing pattern is complete, the method returns to step 502, for printing of the next layer of the 3D printing pattern.

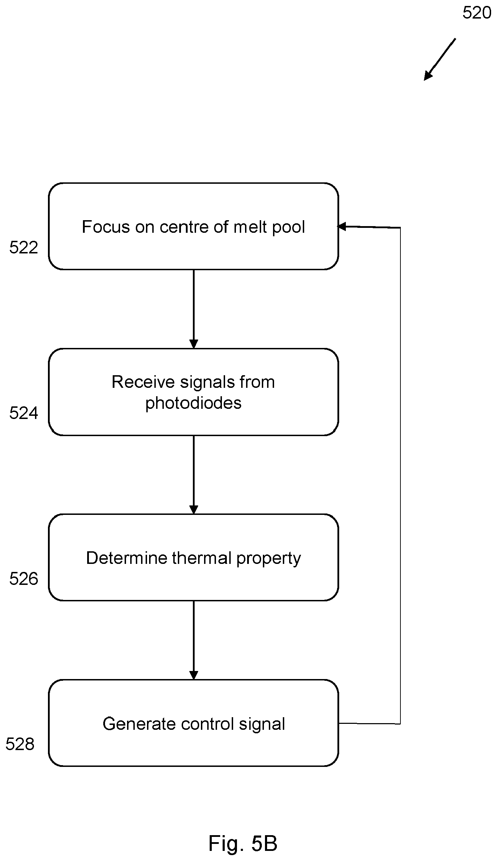

Figure 5B shows a method 520 of monitoring a melt pool during L-PBF manufacturing according to the present disclosure, for example using the monitoring apparatus of Figure 1, 3 or 4. As the skilled person will understand, method 520 feeds into step 506 of Figure 5A.

At step 522, monitoring apparatus is controlled to sample a centre of the melt pool. Accordingly, an electrical signal is generated by each photodiode, the electrical signal generated by each photodiode being indicative of an intensity of electromagnetic radiation received from the melt pool by each photodiode.

At step 524, the electrical signals from the photodiodes are received at a processor.

At step 526, the electrical signals are processed to determine at least one of a maximum temperature of the melt pool, and a thermal distribution of the melt pool.

At step 528, the processor determines whether the maximum temperature and/or thermal distribution of the melt pool are within acceptable ranges. If they are not within acceptable ranges, the processor generates a control signal for adjusting the laser power. In particular, if the maximum temperature of the melt pool is above a threshold, the control signal may instruct a reduction of the laser power. If the thermal distribution of the melt pool is too gradual, the control signal may instruct an increase in the laser beam tracking speed.

As shown in Figure 5B, steps 522-526 are repeated. The frequency of repetition can be user-selected. However, typically, the frequency of repetition is at least 1kHz.

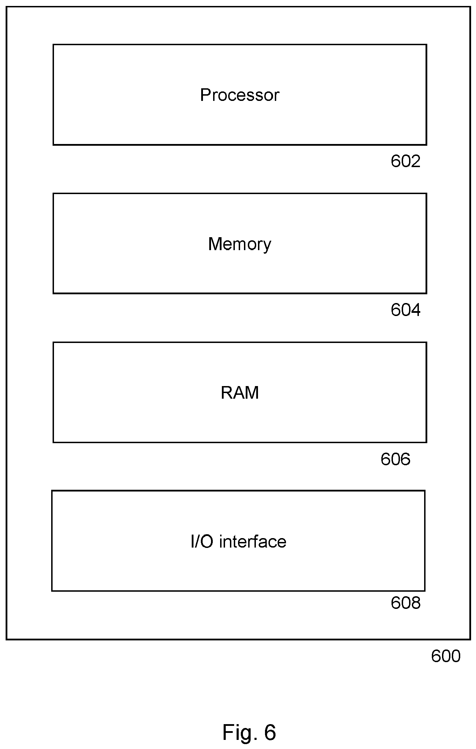

Figure 6 shows a system 600 for implementing the methods according to Figures 5A and 5B.

As shown, system 600 comprises a memory 604 for causing the processor 602 to perform the methods according to Figures 5A and 5B. System 600 also includes a RAM 606 for storing signals received from the photodiodes during processing of the signals by the processor 602. Memory 604 may store the signals after processing by the processor 602. Finally, system 600 includes an input/output (I/O) interface 608 for receiving the signals from the photodiodes, and for sending the control signal to the L-PBD apparatus.

It is to be understood that the above description is intended to be illustrative, and not restrictive. Many other implementations will be apparent to those of skill in the art upon reading and understanding the above description. Although the present disclosure has been described with reference to a specific example implementation, it will be recognized that the disclosure is not limited to the implementations described, but can be practiced with modification and alteration insofar as such modification(s) and alteration(s) remain within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A monitoring apparatus (302) for imaging a melt pool (110) during powder bed fusion manufacturing, the monitoring apparatus comprising:
a first photodiode (308a) having a first field of view (202) configured to receive electromagnetic radiation from a first portion of a melt pool (110); and
a second photodiode (308b) having a second field of view (204) configured to receive electromagnetic radiation from a second portion of the melt pool;
wherein the first portion of the melt pool is different from the second portion of the melt pool.

2. The monitoring apparatus of claim 1, further comprising a third photodiode (308c) having a third field of view (206) configured to receive electromagnetic radiation from a third portion of the melt pool, wherein the third portion is different from the first and second portions.

3. The monitoring apparatus of claim 1 or claim 2, wherein the portions of the melt pool at least partially overlap one another.

4. The monitoring apparatus of any preceding claim, wherein the first field of view is narrower than the second field of view.

5. The monitoring apparatus of any preceding claim, wherein the portions of the melt pool are concentric.

6. The monitoring apparatus according to any preceding claim, wherein the first field of view is less than 50µm across at the melt pool.

7. The monitoring apparatus according to any preceding claim, further comprising a further photodiode (404) configured to receive electromagnetic radiation from the melt pool, the further photodiode having a different spectral response from the other photodiodes.

8. The monitoring apparatus according to claim 7, wherein the further photodiode has a field of view matching that of the first photodiode and is configured to receive electromagnetic radiation from the first portion of the melt pool.

9. A powder bed fusion manufacturing apparatus (100) comprising:
a powder bed (104);
an energy source (102) configured to irradiate a surface of the powder bed with an energy beam (106) to generate a melt pool (110); and
a monitoring apparatus (302) according to any preceding claim, the monitoring apparatus arranged to image the melt pool.

10. The power bed fusion manufacturing apparatus of claim 9, further comprising a controller configured to process signals from each photodiode to determine at least one thermal property of the melt pool.

11. The apparatus of claim 10, wherein the controller is configured to adjust at least one of a power supplied to the energy source and a speed of the energy beam across the surface, based on the determined thermal property of the melt pool.

12. A method of monitoring a melt pool during powder bed fusion manufacturing, the method comprising:
irradiating (504) a surface of a powder bed with an energy beam to generate a melt pool in the powder bed;
receiving (524), from a first photodiode having a first field of view, a first electrical signal indicative of an intensity of electromagnetic radiation received from a first portion of the melt pool;
receiving (524), from a second photodiode having a second field of view, a second electrical signal indicative of an intensity of electromagnetic radiation from a second portion of the melt pool; and
determining (526), based on the first and second electrical signals, at least one thermal property of the melt pool;
wherein the second portion is different from the first portion.

13. The method of claim 12, further comprising receiving, from a third photodiode having a third field of view, a third electrical signal indicative of an intensity of electromagnetic radiation from a third portion of the melt pool; wherein the third portion is different from the first and second portions; and wherein the determining is further based on the third electrical signal.

14. The method of claim 12 or claim 13, further comprising controlling (528) at least one of a power of the energy beam and a speed of the energy beam across the surface, based on the determined thermal property.

15. The method according to any of claims 12 to 14, further comprising controlling the first photodiode so that the first field of view is focussed on a point of intersection between the energy beam and the surface.
